# EUROPÄISCHE PATENTANMELDUNG

(11) **EP 0 920 147 A2**
(43) Veröffentlichungstag der Anmeldung: **02.06.1999**
(21) Anmeldenummer: 98440266.9
(22) Anmeldetag: 20.11.1998
(51) Int. Cl.: H04B 7/26

(54) **Verfahren zum Aufbau einer Telekommunikationsverbindung zu Personen in abgeschlossenen Einrichtungen, wie etwa Personenbeförderungsmittel, sowie Telekommunikationssystem und -netzwerk**

(30) Priorität: 01.12.1997 DE 19753228
(71) Anmelder: ALCATEL, 75008 Paris (FR)
(72) Erfinder: Horrer, Matthias, Raleigh, N.C. 27612 (US)
(74) Vertreter: Brose, Gerhard, Dipl.-Ing.

(57) **Zusammenfassung**

Zum Aufbau einer Telekommunikationsverbindung zu einer Person (B), die sich in einer räumlich weitgehend abgeschlossenen Einrichtung, insbesondere in einem Personenbeförderungsmittel (Flugzeug 1) befindet, innerhalb der sich mehrere, von einer Nebenstellenanlage (4) der Einrichtung betriebene interne Kommunikationsendeinrichtungen (2) befinden, wobei einer privaten Telekommunikationsendeinrichtung (13) der Person in einem insbesondere öffentlichen Telekommunikationsnetz (11) eine persönliche Rufnummer zugewiesen ist, wird zumindest während des Aufenthalts der Person in der Einrichtung (1) die Zuordnung ihrer persönlichen Rufnummer zu derjenigen internen Kommunikationsendeinrichtung (2), die der Person (B) während ihres Aufenthalts in der Einrichtung (1) zugewiesen ist, gespeichert.

Ein an die persönliche Rufnummer der Person (B) gerichteter Anruf wird zusammen mit der persönlichen Rufnummer oder einer entsprechenden Kennung an die Nebenstellenanlage (4) umgeleitet. Dann wird anhand der gespeicherten Zuordnung die der persönlichen Rufnummer bzw. Kennung zugeordnete interne Kommunikationsendeinrichtung (2) ermittelt und der Anruf an diese interne Kommunikationsendeinrichtung (2) in der Einrichtung (Flugzeug 1) weitergeleitet, wodurch die Person (B) weiterhin unter ihrer persönlichen Rufnummer erreichbar bleibt.

## Beschreibung

Die Erfindung betrifft ein Verfahren zum Aufbau einer Telekommunikationsverbindung zu einer Person, die sich in einer stationären oder mobilen, räumlich weitgehend abgeschlossenen Einrichtung, insbesondere in einem Gebäude oder in einem Personenbeförderungsmittel (Flugzeug) befindet, innerhalb der sich mehrere, von einer Nebenstellenanlage der Einrichtung betriebene (interne) Kommunikationsendeinrichtungen befinden, wobei einer (privaten) Telekommunikationsendeinrichtung der Person in einem insbesondere öffentlichen Telekommunikationsnetz eine (persönliche) Rufnummer zugewiesen ist. Außerdem betrifft die Erfindung ein entsprechendes Telekommunikationssystem für stationäre oder mobile, jeweils eine räumlich weitgehend abgeschlossene Einheit bildende Einrichtungen, insbesondere für Gebäude oder Personenbeförderungsmittel (Flugzeug), mit einer innerhalb der Einrichtung vorgesehenen und von außerhalb der Einrichtung anrufbaren Nebenstellenanlage und mit mehreren innerhalb der Einrichtung vorgesehenen, von der Nebenstellenanlage betriebenen (internen) Kommunikationsendeinrichtungen, sowie ein entsprechendes Telekommunikationsnetzwerk.

Allgemein bekannt sind Verfahren und Telekommunikationssysteme, etwa im Bereich der Büro kommunikation, bei denen Anrufe von einer zentralen Nebenstellenanlage (Vermittlungsstelle) an entsprechende Nebenstellenendgeräte, insbesondere an Telefone, weitervermittelt werden.

Außerdem sind Telekommunikationssysteme mit mobilen Telekommunikationsendeinrichtungen, sogenannte Mobilfunksysteme bekannt, die ein hohes Maß an Mobilität bieten. Jedem Teilnehmern ist eine persönliche Rufnummer zugeordnet, unter der er stets erreichbar ist, sofern er sich im Versorungsbereich des Mobilfunksystems befindet.

Aus DE 196 18 531 C1 ist bekannt, einen Anruf von einem Telekommunikationsnetz, nämlich dem GSM-Mobilfunknetz (GSM: Global System for Mobile Communications), zu einer Nebenstellenanlage eines privaten Netzes, nämlich zu einer DECT-Anlage (DECT: Digital Enhanced Cordless Telephone) weiterzuleiten, falls der Teilnehmer sich in einer räumlich abgeschlossenen Einrichtung befindet, etwa in seiner Firma, wo die Nebenstellenanlage installiert ist. Die dort beschriebene Nebenstellenanlage ist über Leitungen mit der Mobilfunkvermittlungsstelle verbunden. Der Anruf wird von dort aus zusammen mit einer Rufnummer, der sogenannten "Nebenstellen-Leitwegnummer" zu der Nebenstellenanlage umgeleitet. Diese Rufnummer ist anstelle der Aufenthaltsinformation, der sogenannten "location area identity") in der Teilnehmerdatei des Mobilfunksystems eingetragen. Anhand dieser Rufnummer ist erkennbar, wie der Teilnehmer über die Nebenstellenanlage im privaten Netz erreichbar ist. Jedoch ist in DE 196 18 531 nicht beschrieben, wie der Anruf von der Nebenstellenanlage an diejenige Kommunikationsendeinrichtung (DECT handset) weitergeleitet wird, die der Teilnehmer benutzen darf. Die beschriebene Rufumleitung ist nicht möglich, wenn der Teilnehmer den Versorgungsbereich des Mobilfunksystems verlassen hat und sich in einer mobilen Einrichtung, etwa in einem Flugzeug, befindet. Gerade für Geschäftskunden, für die Reisen im Flugzeug an der Tagesordnung sind, wäre die Erreichbarkeit auch im Flugzeug wünschenswert, um die Zeit im Flugzeug produktiver nutzen zu können.

Zur Zeit können nur Telefongespräche vom Flugzeug aus an einen Teilnehmer am Boden mit Hilfe einer Kreditkarte oder einer Telefon-Kreditkarte (telephone calling card) abgesetzt werden, wozu sich in Flugzeugen zunehmend Telefone an fast jedem Sitz befinden.

So ist zum Beispiel aus der US-A-5,592,539 ein Telekommunikationssystem bekannt, bei dem ein von einem Flugpassagier aus einem Flugzeug abgesetzter Anruf von einer Bodenstation empfangen und an eine spezielle Zielstation eines bodengestützten Telekommunikationsnetzwerkes weitergeleitet wird. Dazu ist im Flugzeug eine Telefonstation mit Kreditkarten-Lesegerät vorgesehen, über die die Telekommunikation mit der Funk-Bodenstation erfolgt.

Auch in anderen räumlich weitgehend abgeschlossenen Einrichtungen, wie z.B. in Schiffe oder Eisenbahnen, sowie auch in solchen Einrichtungen, wie z.B. Untertage-Bergwerke, bei denen eine Telekommunikation über das öffentliche Telekommunikationsnetz nicht stattfinden kann oder bei denen eine elektromagnetische Funkverbindung aufgrund von Störungen oder aus anderen Gründen, z.B. aus Sicherheitsgründen, nicht stattfinden darf, wäre die Erreichbarkeit einer Person auch innerhalb dieser Einrichtungen äußerst wünschenswert.

Der vorliegenden Erfindung liegt daher die Aufgabe zugrunde, ein Verfahren und ein Telekommunikationssystem der jeweils eingangs genannten Art dahingehend weiterzubilden, daß eine an einem Telekommunikationsnetz teilnehmende Person auch in stationären oder mobilen, räumlich weitgehend abgeschlossenen Einrichtungen weiterhin unter ihrer persönlichen Rufnummer erreichbar bleibt, sowie ein entsprechendes Telekommunikationsnetzwerk zu schaffen.

Diese Aufgabe wird bei dem eingangs genannten Verfahren erfindungsgemäß dadurch gelöst, daß zumindest während des Aufenthalts der jeweiligen Person in der Einrichtung eine Zuordnung ihrer persönlichen Rufnummer zu derjenigen internen Kommunikationsendeinrichtung, die der Person während ihres Aufenthalts in der Einrichtung zugewiesen ist, gespeichert wird, daß ein an die private Telekommunikationsendeinrichtung der Person gerichteter Anruf zusammen mit der persönlichen Rufnummer an die Nebenstellenanlage umgeleitet wird und daß anhand der gespeicherten Zuordnung die der persönlichen Rufnummer zugeordnete interne Kommunikationsendeinrichtung ermittelt und der Anruf an diese interne Kommunikationsendeinrichtung weitergeleitet wird.

Also zumindest während des Aufenthalts der Person in der Einrichtung die Zuordnung ihrer persönlichen Rufnummer zu derjenigen internen Kommunikationsendeinrichtung, die der Person während ihres Aufenthalts in der Einrichtung zugewiesen ist, gespeichert wird, daß ein an die persönliche Rufnummer der Person gerichteter Anruf zusammen mit der persönlichen Rufnummer oder einer entsprechenden Kennung an die Nebenstellenanlage umgeleitet wird und daß anhand der gespeicherten Zuordnung die der persönlichen Rufnummer bzw. Kennung zugeordnete interne Kommunikationsendeinrichtung ermittelt und der Anruf an diese interne Kommunikationsendeinrichtung weitergeleitet wird.

Dadurch können beispielsweise die in einem Flugzeug für abgehende Rufe bereits vorgesehenen internen Kommunikationsendeinrichtungen (Bordtelefone) erfindungsgemäß nun auch für ankommende Anrufe genutzt werden. Dazu richtet die entsprechende Fluggesellschaft für jedes Flugzeug jeweils eine Sonderrufnummer ein, die von Flugpassagieren als Rufumleitungsnummer für an ihre persönliche Rufnummer gerichtete Anrufe benutzt wird. Unter dieser Sonderrufnummer ist die Nebenstellenanlage im Flugzeug erreichbar. Da auch die die persönliche Rufnummer des Teilnehmers (Flugpassagiers), oder eine entsprechende eindeutige Kennung (Sitzplatznummer) mitübertragen wird, kann der Anruf zum Teilnehmer weitergeleitet werden, nachdem das ihm zugeordnete interne Bordtelefon anhand der persönlichen Rufnummer bzw. Kennung ermittelt worden ist.

Die Kennung kann z.B. als sogenannte Calling-Party-Address (CgPA) zur Verfügung stehen. Die Rufumleitung kann noch um eine Zeitabhängigkeit ergänzt werden, um erst ab einer bestimmten Uhrzeit alle Anrufe für den Teilnehmer zu dieser Sonderrufnummer umleiten.

Bei einer vorteilhaften Ausgestaltung der Erfindung erfolgt die Kommunikationsverbindung zwischen der Nebenstellenanlage und ihren internen Kommunikationsendeinrichtungen drahtlos, insbesondere mittels Infrarot-Signalen über Infrarot-Telefone, die als Mobilteile genutzt werden. Wenn elektromagnetische Störungen innerhalb der Einrichtung kein Problem sind, können die internen Kommunikationsendeinrichtungen auch Funktelefone sein, insbesondere die persönlichen Mobilfunktelefone der Teilnehmer (Flugpassagiere).

Die Zuordnung der persönlichen Rufnummer von der privaten Telekommunikationsendeinrichtung zur jeweiligen internen Kommunikationsendeinrichtung sowie die Rufumleitung kann in der Einrichtung über die dort zugewiesene interne Kommunikationsendeinrichtung, d.h. im Flugzeug über das jeweilige am Sitz vorgesehene interne Bordtelefon, erfolgen. Jeder Flugpassagier kann sich dezentral mittels eines in seiner mobilen Telekommunikationsendeinrichtung befindlichen Datenträgers, insbesondere mittels seiner SIM (Subscriber Identification Module)-Karte, über das interne Bordtelefon an der Nebenstellenanlage registrieren. Dabei wird zwischen seiner persönlichen Rufnummer und dem interne Bordtelefon anhand dessen interner Rufnummer oder anhand der Sitzplatznummer eine Zuordnung hergestellt, die in der Nebenstellenanlage oder in einer am Boden befindlichen Datenbank abgespeichert wird. Die Zuordnung kann auf einfache Weise auch zentral erfolgen, indem bereits beim Betreten der Einrichtung die persönlichen Rufnummern von den Personen, denen in der Einrichtung eine interne Kommunikationsendeinrichtung zugewiesen werden soll, aufgenommen und zusammen mit der jeweils mit der Kennung des zugewiesenen internen Kommunikationsendeinrichtung, d.h. mit deren interner Rufnummer oder mit der Sitzplatznummer, abgespeichert werden. Entsprechend kann auch bereits beim Betreten der Einrichtung zentral das Umleiten von an persönliche Rufnummern gerichteten Anrufen an die Nebenstellenanlage ausgelöst werden.

Gerade bei einer Telekommunikationsverbindung mit einem Flugzeug oder mit einem Schiff ist es von Vorteil, wenn die Telekommunikationsverbindung zwischen der privaten Telekommunikationsendeinrichtung und der Nebenstellenanlage zentral über eine Funk-Basisstation am Boden erfolgt. Diese Funk-Basisstation ist z.B. eine Satellitenfunkstation, die zusätzlich zur üblichen Betriebsfunkübertragung auch die Telekommunikationsverbindung mit dem Flugzeug bzw. seiner Nebenstellenanlage herstellt. Bereits in der Funk-Basisstation kann die Zuordnung der persönlichen Rufnummer eines Flugpassagiers zu seinem im Flugzeug zugewiesenen internen Telefon erfolgen und ein umgeleiteter Anruf zusammen mit einer der persönlichen Rufnummer entsprechenden Kennung, z.B. mit der Sitzplatznummer oder mit der internen Rufnummer des diesem Sitzplatz zugeordneten internen Telefons, an die Nebenstellenanlage des Flugzeugs weitergeleitet werden.

Bei stationären Einrichtungen, insbesondere bei Gebäuden oder auch bei Untertage-Bergwerken, kann die Kommunikation mit der Nebenstellenanlage drahtgebunden über eine entsprechende Basisstation und über Verbindungsleitungen erfolgen. Bei mobilen Einrichtungen, insbesondere bei Flugzeugen oder Schiffen, erfolgt die Telekommunikationsverbindung zwischen der Nebenstellenanlage drahtlos über eine entsperechende Funk-Basisstation.

Die oben genannte Aufgabe wird bei einem Telekommunikationssystem der eingangs genannten Art gelöst durch eine Zuordnungseinrichtung, in der zumindest während des Aufenthalts der jeweiligen Person in der Einrichtung eine Zuordnung ihrer persönlichen Rufnummer zu derjenigen internen Kommunikationsendeinrichtung, die der Person während ihres Aufenthalts in der Einrichtung zugewiesen ist, gespeichert ist, um einen an die private Telekommunikationsendeinrichtung der Person gerichteten Anruf zusammen mit der persönlichen Rufnummer an die Nebenstellenanlage umzuleiten, wobei die Zuordnungseinrichtung anhand der gespeicherten Zuordnung die der persönlichen Rufnummer zugeordnete interne Kommunikationsendeinrichtung ermittelt und die Rufumleitung an diese interne Kommunikationsendeinrichtung steuert.

Demnach gibt es eine Zuordnungseinrichtung, in der die Zuordnung der (persönlichen) Rufnummer einer der Person zugeordneten (privaten) Telekommunikationsendeinrichtung eines insbesondere öffentlichen Telekommunikationsnetzes zu derjenigen internen Kommunikationsendeinrichtung, die der Person zumindest während ihres Aufenthalts in der Einrichtung zugewiesen ist, gespeichert ist, wobei ein an die persönliche Rufnummer gerichteter und zusammen mit dieser persönlichen Rufnummer oder einer entsprechenden Kennung umgeleiteter Anruf nach Informationsaustausch mit der Zuordnungseinrichtung an die entsprechende interne Kommunikationsendeinrichtung der Nebenstellenanlage weitergeleitet wird. Mit diesem Telekommunikationssystem lassen sich die bereits oben hinsichtlich des Verfahrens geschilderten Vorteile erzielen.

Bei einer bevorzugten Ausführungsform des erfindungsgemäßen Telekommunikationssystems ist die Nebenstellenanlage eine sogenannte PBX (Private Branch eXchange) oder eine PABX (Private Automatic Branch eXchange).

In Einrichtungen, in denen elektromagnetische Störungen kein Problem darstellen, kann die Kommunikationsverbindung zwischen der Nebenstellenanlage und ihren internen Kommunikationsendeinrichtungen mit elektromagnetischen Funksignalen drahtlos erfolgen. Für eine störungsfreie drahtlose Kommunikation können auch Infrarot-Telefone als interne Kommunikationsendeinrichtungen verwendet werden.

Die Zuordnungseinrichtung ist vorzugsweise eine rechnergesteuerte Datenbank, die sich beispielsweise innerhalb der Einrichtung, z.B. an Bord des Flugzeugs, befinden kann. Anhand der mitübertragenen persönlichen Rufnummer erfolgt dann erst an Bord des Flugzeugs mit Hilfe der Datenbank die Zuordnung der persönlichen Rufnummer zum jeweiligen internen Telefon.

Bei einer bevorzugten Ausführungsform ist eine Funk-Basisstation vorgesehen, mittels der die Telekommunikation zwischen dem öffentlichen Telekommunikationsnetz und der Nebenstellenanlage zentral durchgeführt wird. In diesem Fall kann die Zuordnungseinrichtung (Datenbank) Teil eines Intelligenten Netzes sein, so daß die Zuordnung über das Intelligente Netz bereits am Boden erfolgen kann. An die Nebenstellenanlage im Flugzeug braucht dann lediglich eine entsprechende Kennung (z.B. die Sitzplatznummer), welche die zugeordnete interne Kommunikationsendeinrichtung im Flugzeug bezeichnet, mitübertragen zu werden, damit der umgeleitete Anruf von der Nebenstellenanlage an das dieser Kennung entsprechende interne Telefon weitergeleitet werden kann.

Bei einer bevorzugter Weiterbildung dieser Ausführungsform ist eine mit der Zuordnungseinrichtung oder der Funk-Basisstation in Informationsverbindung stehende Leseeinrichtung vorgesehen, mittels der Daten aus der einer Person zugeordneten, insbesondere mobilen, privaten Telekommunikationsendeinrichtung auslesbar sind und/oder die Rufumleitung zur internen Kommunikationsendeinrichtung auslösbar ist.

Wenn einem Flugpassagier beim Einchecken ein Sitzplatz zugewiesen wird, werden auch Informationen über das Mobiltelefon des Flugpassagiers abgefragt und zusammen mit der Sitzplatznummer in der Zuordnungseinrichtung abgespeichert. Dies kann automatisch geschehen, wobei diese Information separat abgelegt werden sollte, damit keine Probleme mit sonstigen Daten der Fluggesellschaft auftreten. Auf eine solche separate Zuordnungseinrichtung kann dann bei einem umgeleiteten Anruf zugegriffen werden. Wenn die im Flugzeug vorhandenen internen Telefone jeweils sitzabhängig adressiert sind, kann ein umgeleiteter Anruf anhand der mitübertragenen Sitzplatznummer bereits eindeutig an das entsprechende interne Telefon im Flugzeug weitergeleitet werden.

Besonders einfach läßt sich die Rufumleitung und die Zuordnung einer internen Kommunikationsendeinrichtung vornehmen, wenn die Leseeinrichtung ein Kartenleser für einen Datenträger ist, der für die Benutzung einer mobilen, privaten Telekommunikationsendeinrichtung vorgesehen ist, und der als SIM-Karte (SIM: subscriber identity module) bezeichnet wird. Bereits beim Check-in können die Flugpassagiere zentral eine entsprechende Registrierung oder Subscription durchführen, indem sie z.B. die SIM-Karte ihres privaten Mobiltelefons in den Kartenleser für einen Informationsaustausch, insbesondere für die Zuordnung ihrer persönlichen Rufnummer zu dem ihnen im Flugzeug jeweils zugewiesenen internen Telefon, einführen.

Wenn die Zuordnungseinrichtung in Informationsverbindung mit der Funk-Basisstation steht, ist eine feste sitzplatzabhängige Adressierung der internen Telefone eines Flugzeugs möglich, so daß die Zuordnung der persönlichen Rufnummern zu den internen Telefonen in einer Zuordnungseinrichtung am Boden erfolgen kann.

In einer alternativen Ausführungsform steht die Zuordnungseinrichtung hingegen mit der Nebenstellenanlage in Informationsverbindung, so daß anhand der mitübermittelten persönlichen Rufnummer erst im Flugzeug die Zuordnung zum jeweiligen internen Telefon erfolgt.

Schließlich umfasst die Erfindung auch noch ein Telekommunikationsnetzwerk für Personenbeförderungsgesellschaften, insbesondere für Flug-/Schiff- oder Eisenbahngesellschaften, umfassend ein wie oben beschriebenes, vorzugsweise nicht öffentliches Telekommunikationssystem und mindestens zwei jeweils in einem Personenbeförderungsmittel (Flugzeug) vorgesehene Nebenstellenanlagen, denen jeweils eine eigene Sonderrufnummer eines insbesondere öffentlichen Telekommunikationsnetzes zugewiesen ist. Mit Hilfe eines solchen Telekommunikationsnetzwerkes können die an Sonderrufnummern umgeleiteten Anrufe des öffentlichen Telekommunikationsnetzes jeweils an die entsprechende Nebenstellenanlage im jeweiligen Flugzeug weitergeleitet werden.

Weitere Vorteile der Erfindung ergeben sich aus der Beschreibung und den Zeichnungen. Ebenso können die vorstehend genannten und die noch weiter aufgeführten Merkmale erfindungsgemäß jeweils einzeln für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Die Erfindung ist in den folgenden Zeichnung dargestellt und wird anhand eines Ausführungsbeispiels näher erläutert:
- Fig. 1: zeigt schematisch ein erfindungsgemäßes Telekommunikationssystem am Beispiel eines Flugzeugs, und
- Fig. 2: zeigt das Ablaufdiagramm für ein erfindungsgemäßes Verfahren zum Aufbau einer Telekommunikationsverbindung in dem Telekommunikationssystem.

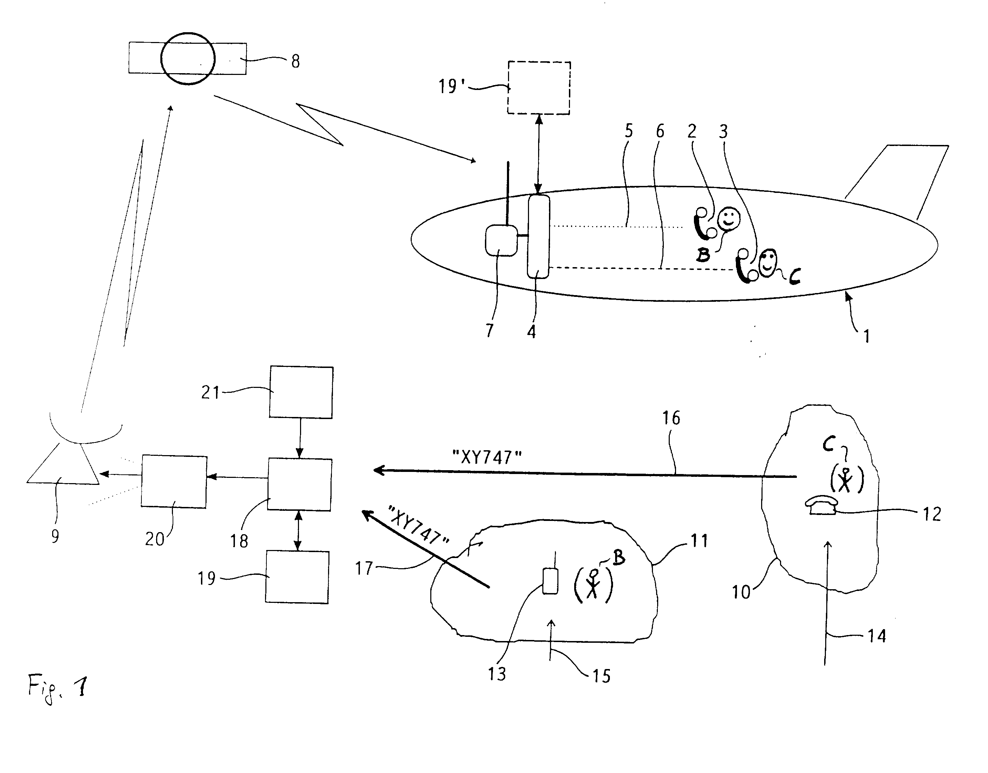

Ein in Fig. 1 dargestelltes Flugzeug 1 ist mit mehreren internen Kommunikationsendeinrichtungen in Form von Telefonen ausgestattet, von denen mit den Bezugsziffern 2 und 3 lediglich zwei beispielhaft dargestellt sind. Vorzugsweise befindet sich an jedem Flugzeugsitz eine solche interne Kommunikationsendeinrichtung. Alle internen Kommunikationsendeinrichtungen 2, 3 sind an eine Nebenstellenanlage 4 angeschlossen und werden allein von dieser betrieben. Die Kommunikationsverbindung 5, 6 zwischen der Nebenstellenanlage 4 und ihren internen Kommunikationsendeinrichtungen 2, 3 kann drahtlos oder über Verbindungsleitungen erfolgen. Die Nebenstellenanlage 4 ist eine Nebenstellenanlage und an eine im Flugzeug 1 angeordnete Sende/Empfangseinheit 7 angeschlossen, über die mit Hilfe eines Satelliten 8 Funksignale mit einer am Boden befindlichen Funk-Basisstation 9 ausgetauscht werden können.

Eine von der Fluggesellschaft eingerichtete Sonderrufnummer "XY747" wird von Flugpassagieren, die Teilnehmer eines öffentlichen PSTN-Telekommunikationsnetz 10 (PSTN=Public Switched Telecommunications Network) sind, oder die Teilnehmer eines Mobilfunknetzes 11, wie z.B. GSM (Global System for Mobile communication), sind, als Rufumleitungsnummer für ihre privaten Telekommunikationsendeinrichtung 12, 13 benutzt. Diese Sonderrufnummer "XY747" ist für alle Passagiere des Flugzeugs 1 dieselbe.

Bei den privaten Telekommunikationsendeinrichtung kann es sich z.B. um stationäre Telefone 12 oder um Mobiltelefone 13 handeln. In diesem Beispiel hat die Person (Teilnehmer) B eine privaten Mobilfunkanschluß und ist in dem Mobilfunknetz 11 unter seiner persönlichen Rufnummer erreichbar (Pfeil 15). Die Person C ist Teilnehmer des öffentlichen Telkommunikationsnetzes 10 und hat einen herkömmlichen Telefonanchluß, dem eine Rufnummer zugeordnet ist. Der Teilnehmer C ist unter dieser Rufnummer erreichbar (Pfeil 14). Befinden sich die Personen (Teilnehmer) außerhalb ihrer Telekommunikationsnetze, so sollen sie dennoch weiterhin erreichbar sein. Beispielsweise befinden sich B und C als Flugpassagiere auf den Sitzen Nr. 2 bzw. 3 an Bord des Flugzeuges 1, dem die Sonderrufnummer "XY747" zugeordnet wurde.

Wird nun eine private Telekommunikationsendeinrichtung, z.B. das Mobiltelefon 13 des Teilnehmers B unter seiner persönlichen Rufnummer angerufen, so wird dieser Anruf 15 zusammen mit der persönlichen Rufnummer als umgeleiteter Anruf 1 7 behandelt und unter der Sonderrufnummer "XY747" an eine Funk-Basisstation 18 geleitet, die hier einen Dienstesteuerungspunkt SCP (Service Control Point) eines IN-Netzes 20 darstellt. Mit Hilfe einer in Informationsverbindung mit der Funk-Basisstation 18 stehenden Zuordnungseinrichtung 19, in der die Zuordnung der persönlichen Rufnummer des Teilnehmers (Flugpassagiers) zu dem ihm im Flugzeug 1 zugewiesenen Sitzplatz gespeichert ist, wird anhand der mitübertragenen persönlichen Rufnummer die zugewiesene Sitzplatznummer ermittelt. Diese Sitzplatznummer (Kennung) wird in eine vermittelbare Nummer (routing number) umgesetzt und mit dem Anruf an einen Dienstevermittlungspunkt SSP (Service Switching Point) im IN-Netz 20 weitergegeben. Von dort wird der Anruf über die Funk-Basisstation 9, den Satelliten 8 und die im Flugzeug installierte Sende-/Empfangseinheit 7 an die dortige Nebenstellenanlage 4 weitergeleitet, die ihrerseits den Anruf entsprechend der mitübertragenen Sitzplatznummer an die an diesem Sitzplatz befindliche interne Kommunikationsendeinrichtung 2 weiterleitet.

Mit der in Fig. 1 dargestellten Funk-Basisstation 18 steht außerdem eine Leseeinrichtung 21 in Informationsverbindung, mittels der beim Einchecken eines Flugpassagiers Daten seiner mobilen privaten Telekommunikationsendeinrichtung 13 gelesen werden können. Diese Daten werden zusammen mit der dem Flugpassagier zugewiesenen Sitzplatznummer automatisch in der Zuordnungseinrichtung 19 gespeichert.

Anstelle einer bodengestützten Zuordnungseinrichtung 19 kann die Zuordnung auch über eine im Flugzeug 1 vorgesehene Zuordnungseinrichtung 19' erfolgen, die in Informationsverbindung mit der Nebenstellenanlage 4 steht und in der die Zuordnung der persönlichen Rufnummern zu den jeweiligen Sitzplätzen gespeichert ist. Anhand der persönlichen Rufnummer, die zusammen mit dem Anruf an die die Nebenstellenanlage 4 weitergeleitet wird, erfolgt dann nach Zugriff auf die Zuordnungseinrichtung 19' das Weiterleiten an die der persönlichen Rufnummer zugeordnete interne Kommunikationsendeinrichtung 2.

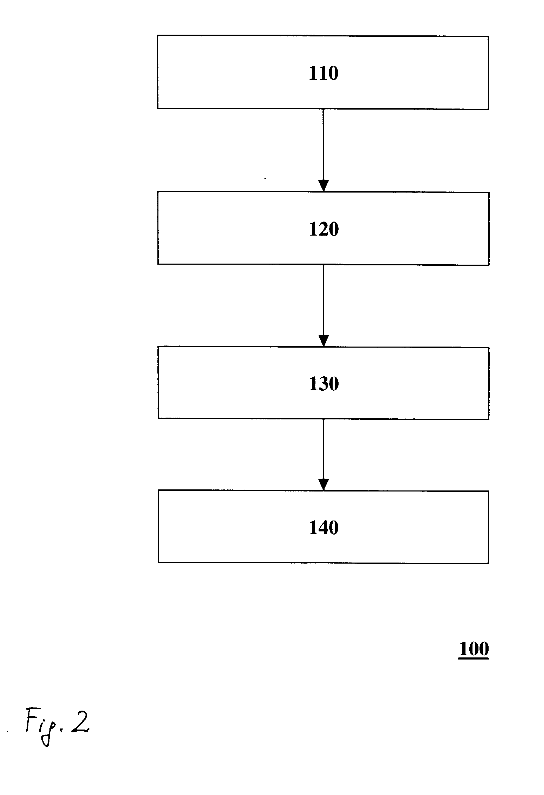

Das erfindungsgemäße Verfahren wird nun anhand der Fig. 2 näher beschrieben, wobei auch auf die Fig. 1 Bezug genommen wird: Die Fig.2 zeigt das Ablaufdiagramm des Verfahrens 100, bei dem in einem ersten Schritt 110 dem Teilnehmer B seine persönliche Rufnummer zugewiesen wird. Wenn der Teilnehmer sich im Versorgungsgebiet des Mobilfunksystems 11 aufhält, ist er unter dieser Rufnummer stets erreichbar.

Der Teilnehmer befindet sich aber nun als Passagier an Bord des in Fig. 1 gezeigten Flugzeuges 1. Daher wird in einem nächsten Schritt 120 ein Anruf, der bei der Mobilfunkvermittlungsstelle eingeht an die im Flugzeug installierte Nebenstellenanlage 4 umgeleitet.

Dann wird in einem Schritt 130 die Zuordnung der persönlichen Rufnummer zu dem Bordtelefon 2 des Teilnehmers in der Zuordnungseinrichtung 19 gespeichert.

Anhand dieser Zuordnung wird beim Eingan des Anrufs in einem Schritt 140 die Endeinrichtung, nämlich das Bordtelefon 2, ermittelt. Der Anruf wird dann von der Nebestelenanlage 4 an dieses Bordtelefon 2 weiter geleitet.

## Patentansprüche

1. Verfahren (100) zum Aufbau einer Telekommunikationsverbindung zu mindestens einer Person (B; C), die sich in einer räumlich weitgehend abgeschlossenen Einrichtung (1) befindet, innerhalb der sich mehrere von einer Nebenstellenanlage (4) der Einrichtung betriebene interne Kommunikationsendeinrichtungen (2, 3) befinden, wobei der jeweiligen Person (B) zur Nutzung einer außerhalb der Einrichtung in einem Telekommunikationsnetz (11) angeordneten privaten Telekommunikationsendeinrichtung (13) eine persönliche Rufnummer zugewiesen ist wird (Schritt 110), wobei ein an die private Telekommunikationsendeinrichtung (13) der Person (B) gerichteter Anruf zusammen mit einer Rufnummer an die Nebenstellenanlage (4) umgeleitet wird (Schritt 120) und wobei anhand dieser Rufnummer die interne Kommunikationsendeinrichtung (2) ermittelt und der Anruf an diese interne Kommunikationsendeinrichtung (2) weitergeleitet werden (Schritt 140),
**dadurch gekennzeichnet,**
daß die Rufnummer die persönliche Rufnummer der jeweiligen Person (B) ist und daß zumindest während des Aufenthalts der jeweiligen Person (B) in der Einrichtung (1) eine Zuordnung ihrer persönlichen Rufnummer zu derjenigen internen Kommunikationsendeinrichtung (2) gespeichert wird, die der Person während ihres Aufenthalts in der Einrichtung zugewiesen wird (Schritt 130).

2. Verfahren (100) nach Anspruch 1, dadurch gekennzeichnet, daß die Telekommunikationsverbindung zwischen der privaten Telekommunikationsendeinrichtung (13) und der Nebenstellenanlage (4) über eine Funk-Basisstation (18) am Boden erfolgt.

3. Verfahren (100) nach Anspruch 1, dadurch gekennzeichnet, daß die Telekommunikationsverbindung zwischen der Nebenstellenanlage (4) und ihren internen Kommunikationsendeinrichtungen (2, 3) drahtlos, insbesondere mittels Infrarot-Signalen, erfolgt.

4. Verfahren (100) nach Anspruch 1, dadurch gekennzeichnet, daß beim Betreten der Einrichtung die persönlichen Rufnummer von der jeweiligen Person, denen eine interne Kommunikationsendeinrichtung (2) zugewiesen wird, in einer Zuordnungseinrichtung (19) gespeichert werden, und daß eine Rufumleitung von der privaten Telekomunikationsendeinrichtung (13) auf die interne Kommunikationsendeinrichtung (2) geschaltet wird (Schritt 130).

5. Telekommunikationssystem für eine räumlich weitgehend abgeschlossene Einheit bildende Einrichtung (1) mit einer innerhalb der Einrichtung vorgesehenen und von außerhalb der Einrichtung anrufbaren Nebenstellenanlage (4) und mit mehreren innerhalb der Einrichtung vorgesehenen, von der Nebenstellenanlage (4) betriebenen internen Kommunikationsendeinrichtungen (2, 3), die sich innerhalb der Einrichtung befindlichen Personen (B, C) zugewiesen sind, denen jeweils zur Nutzung einer außerhalb der Einrichtung in einem Telekommunikationsnetz (11) angeordneten privaten Telekommunikationsendeinrichtung (13) eine persönliche Rufnummer zugewiesen ist, bei dem die Nebenstellenanlage (4) von einer Vermittlungseinrichtung des Telekommunikationsnetzes (11) einen an die private Telekommunikationsendeinrichtung (13) der Person (B) gerichteten Anruf zusammen mit einer Rufnummer empfängt und anhand dieser Rufnummer die interne Kommunikationsendeinrichtung (2) ermittelt und den Anruf an diese interne Kommunikationsendeinrichtung (2) weiterleitet,
**dadurch gekennzeichnet,**
daß die Rufnummer die persönliche Rufnummer der jeweiligen Person (B) ist und daß die Einrichtung (1) eine Zuordnungseinrichtung (19) enthält, die zumindest während des Aufenthalts der jeweiligen Person (B) in der Einrichtung (1) eine Zuordnung ihrer persönlichen Rufnummer zu derjenigen internen Kommunikationsendeinrichtung (2), die der Person während ihres Aufenthalts in der Einrichtung zugewiesen ist, speichert und die anhand der gespeicherten Zuordnung die Rufumleitung an diese interne Kommunikationsendeinrichtung (2) steuert.

6. Telekommunikationssystem nach Anspruch 5, dadurch gekennzeichnet, daß die Einrichtung ein Personenbeförderungsmittel, insbesondere ein Flugzeug (1) ist, und daß das Telekommunikationsnetz ein öffentliches Telekommunikationsnetz, insbesondere ein Mobilfunknetz (11), ist.

7. Telekommunikationssystem nach Anspruch 6, dadurch gekennzeichnet, daß eine am Boden angeordnete Funk-Basisstation (18) die Telekommunikation zwischen dem öffentlichen Telekommunikationsnetz (11) und der Nebenstellenanlage (4) durchführt, und daß die Zuordnungseinrichtung (19) in Informationsverbindung mit der Nebenstellenanlage (4) steht.

8. Telekommunikationssystem nach Anspruch 5, dadurch gekennzeichnet, daß die Nebenstellenanlage (4) und ihre internen Kommunikationsendeinrichtungen (2, 3) drahtlose Sende-Empfänger enthalten, um mittles Funksignalen oder mittels Infrarot-Signalen miteinander zu kommunizieren.

9. Telekommunikationssystem nach Anspruche 5, dadurch gekennzeichnet, daß eine mit der Zuordnungseinrichtung (19) in Informationsverbindung stehende Leseeinrichtung (21), insbesondere Kartenleseeinrichtung, die Daten für die Kennzeichnung der persönlichen Rufnummer von einem Datenträger liest, der zur Nutzung der privaten Telekommunikationsendeinrichtung (13) durch die Person (B) vorgesehen ist, insbesondere von einer SIM-Karte zur Nutzung des Mobilfunknetzes liest.

10. Telekommunikationsnetzwerk für Personenbeförderungsgesellschaften, insbesondere für Flug-/Schiff- oder Eisenbahngesellschaften, umfassend ein Telekommunikationssystem nach Anspruch 5 mit mindestens zwei jeweils in einem Personenbeförderungsmittel (1) vorgesehenen Nebenstellenanlagen (4), denen jeweils eine eigene Sonderrufnummer des öffentlichen Telekommunikationsnetzes (11) zugewiesen ist.
